# EUROPEAN PATENT APPLICATION

(11) **EP 2 988 082 A1**
(43) Date of publication of application: **24.02.2016**
(21) Application number: 13882149.1
(22) Date of filing: 04.11.2013
(51) Int. Cl.: F25D 19/00, F25D 11/00, F25D 23/00

(54) **TUBE-FITTING STRUCTURE FOR PURE-WATER LINE**

(30) Priority: 18.04.2013 KR 20130042844
(71) Applicant: Joung, Whi-Dong, Hwaseong-si, Gyeonggi-do 445-926 (KR)
(72) Inventor: KIM, Min-Won, Eumseong-gun Chungcheongbuk-do 369-823 (KR); LEE, Jae-Ik, Cheongju-si Chungcheongbuk-do 361-825 (KR); HWANG, Pil-Kang, Yongin-si Gyeonggi-do 449-040 (KR); PARK, Sang-Cheon, Cheongju-si Chungcheongbuk-do 361-832 (KR); KANG, Sung-Muk, Cheongju-si Chungcheongbuk-do 361-803 (KR); JOUNG, Whi-Dong, Gyeonggi-do, 445-926 (KR)
(74) Representative: Hering, Hartmut
(86) International application number: PCT/KR2013/009903
(87) International publication number: WO 2014/171603

(57) **Abstract**

The present invention relates to a tube-fitting structure for a pure-water line of a water purifier or refrigerator. The present invention provides a tube connecting structure in which a tube fitted into a body having a fitting part formed therein is fixed by a cap, wherein a guide groove formed to have a receiving recess curved downward is formed on an outer circumferential surface of a tube link part of the body, and wherein a guide protrusion is formed on an inner circumferential surface of the tube corresponding to the outer circumferential surface of the body to allow the guide protrusion to be coupled along the guide groove, so that the tube is easily assembled with the body while the cap is rotated due to an inclined surface of the guide groove. Thus, in spite of enhancing the air tightness of the fitting structure, the assembly is improved.

## Description

### [Technical Field]

The present invention relates to a tube-fitting structure for a pure-water line, which is provided to install a water valve, or to connect a filter head or a tube to a tube on a pure-water line of a water purifier or a refrigerator, and which is capable of tightly coupling a body to a tube to prevent water from leaking while easily coupling the body to the tube and of disassembling the coupled body and tube in case of emergency to repair and maintain the body and the tube.

### [Background Art]

In general, a water purifier or a refrigerator includes a pure-water line for discharging pure water after purifying water provided from a water source. The pure-water line may be connected to a water valve for supply water to the pure-water line and various kinds of filters such as a sediment filter and a carbon filter membrane according to use in the water purifier, so that the water is purified through physical and chemical processes while passing through the filters.

Fitting connection parts are formed on several portions of the pure-water line in order to connect a water valve, a filter, other components and a tube to each other. In this case, when a connection between the fitting connection parts is not perfectly sealed, water may leak.

Specifically, although a tube and a body are coupled to each other while being tightly fitted with each other to prevent a leakage between the tube and the body, it is difficult to assemble a fitting part in an assembling process, so that the workability is deteriorated.

That is, although a cap coupling structure is formed in a screw type such that the cap coupling structure is rotationally coupled to be assembled in the related art, since this structure is turned several times to be tightened by using a separated tool, it is very inconvenient to perform the work. Thus, in recent years, a press-fitting scheme is mainly used, in which a body and a cap, on which fitting portions are formed, are formed in a latching structure in which a body and a cap, such that the body and the cap are fitted and engaged with each other.

However, although such a structure has a merit that tightly seals the fitting connection part, a dedicated tool is required to assemble the structure. In addition, since the fitting connection part is fitted by strength force in spite of using a tool, the workability is very deteriorated and it is hard to repeatedly assemble very many fitting connection parts which exist on the pure-water line, so that the workability is more deteriorated.

Specifically, in recent years, there has been required more enhanced air tightness in a leakage test in order to improve the quality of a product. Thus, although the assembling work of the assembling process becomes more difficult, a worker has readily accepted inconvenience to meet such requirement.

In addition, in case of the press-fitting assembly, it is almost impossible to disassemble the fitting connection part to repair or maintain the fitting connection part and even though the fitting connection part is disassembled, the bod may be damaged or the cap may be destroyed.

### [Disclosure]

### [Technical Problem]

Therefore, the present invention is provided to improve the workability of assembling the tube and a body by improving a fitting structure of a tube, so that the inconvenience of a worker in the assembling process is removed and the air tightness is perfectly completed.

In addition, if necessary, a cap is enabled to be easily separated by using a tool, so that the maintenance and repair may be easily performed.

### [Technical Solution]

To this end, the present invention provides a tube connecting structure in which a tube fitted into a body having a fitting part formed therein is fixed by a cap, wherein a guide groove formed to have a receiving recess curved downward is formed on an outer circumferential surface of a tube link part of the body, wherein a guide protrusion is formed on an inner circumferential surface of the tube corresponding to the outer circumferential surface of the body to allow the guide protrusion to be coupled along the guide groove, so that the tube is easily assembled with the body due to an inclined surface of the guide groove. Thus, in spite of enhancing the air tightness of the fitting structure, the assembly is improved. In addition, latch means is formed on an end of the guide groove, so that the tube is tightly assembled to a pure-water line without arbitrarily separating the coupled cap.

In addition, a fastening part for safely receiving a tool is formed on a top surface of the cap, such that the cap is simply assembled or disassembled by using a tool, thereby improving the workability. A stopper is formed on an outer circumferential surface and a protrusion sill is formed on a lower end of the cap corresponding to the stopper, so that a radius of gyration of the stopper may be restricted.

In addition, cylindrical stainless members are embedded in the cap, so that the tube-fitting structure is reinforced in a dual sustainer structure by the stainless members each formed at the tube link part and the cap. The cap is formed of a transparent material, so that it may be confirmed with the unaided eyes that the tube is fitted by the opaque stainless member.

### [Advantageous Effects]

Therefore, according to the tube-fitting structure of the present invention, the body and the tube are more tightly coupled to each other without changing any assembly components to allow the air tightness of the contact portion to be maintained even when the tube-fitting structure is used for a long time, so that the water leakage protection function may be more enhanced. Although the sealing strength of the fitting structure is enhanced, the tube and the body are easily coupled in the assembly process, so that inconvenience that causes worker's hands to get blistered when the assembly is manually and repeatedly performed may be solved. Thus, the workability of the assembly process may be greatly improved. In addition, since the tube link part or the cap is prevented from being damaged or destroyed even when the cap is separated, the fitting structure may be continuously used without exchanging any components in maintenance or repair, so that the fitting structure is very economical.

### [Description of Drawings]

FIG. 1 is an exploded perspective view showing a tube-fitting structure for a pure-water line according to the present invention.
FIG. 2 is a front view showing a structure of a tub contact part according to the present invention.
FIG. 3 is an appearance view showing a state that a pure-water line is fitted with a tube according to the present invention.

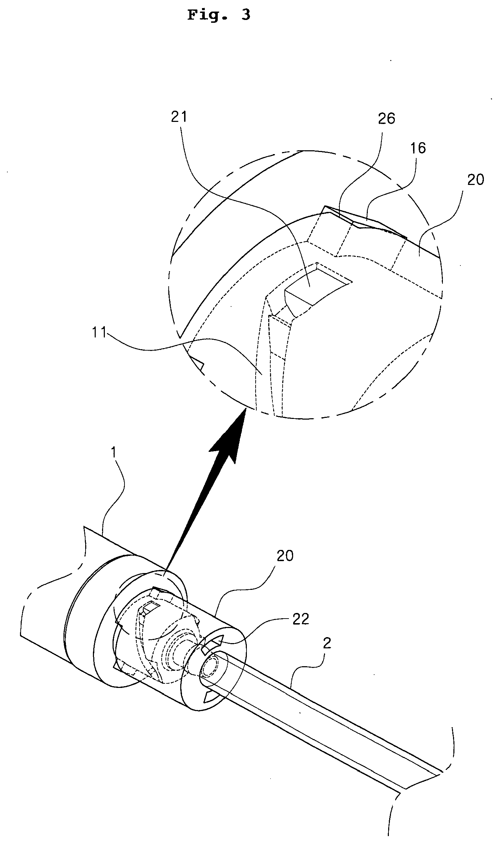

FIG. 3 is a front view showing a cap coupling structure according to the present invention.

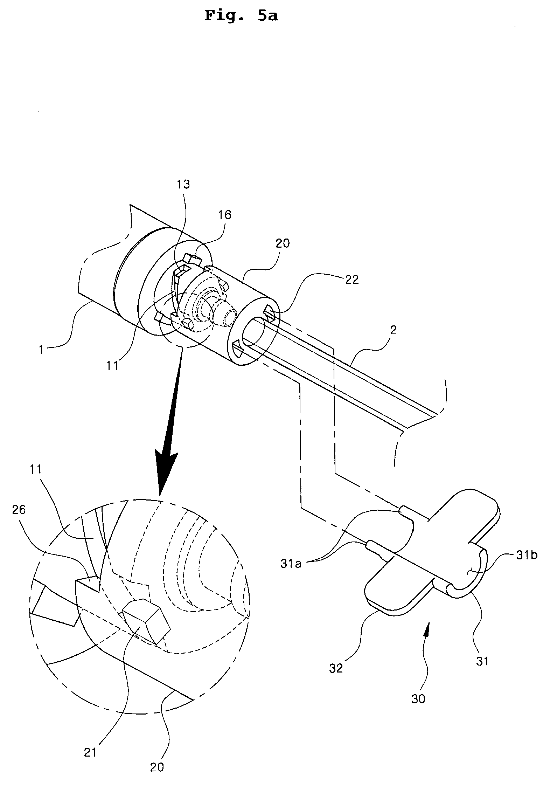

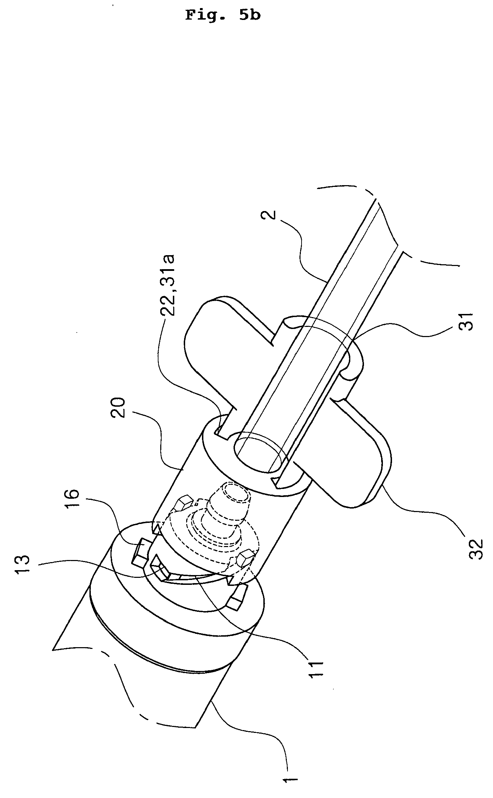

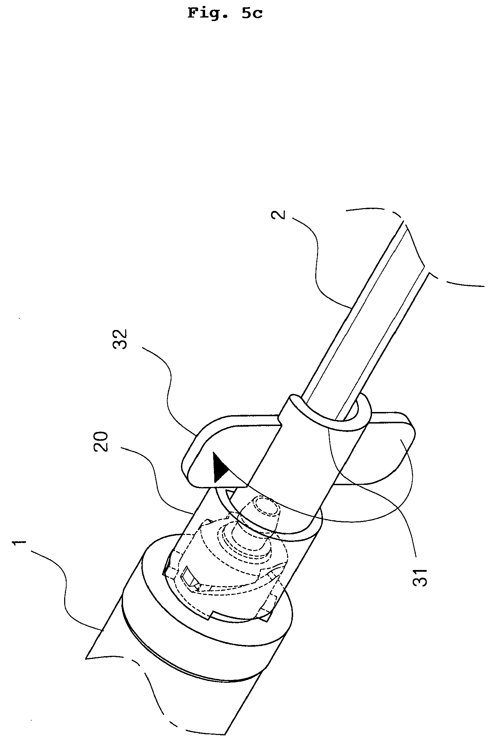

FIGS. 5a to 5c are views illustrating a sequence of fitting a tube into a pure-water line according to the present invention.

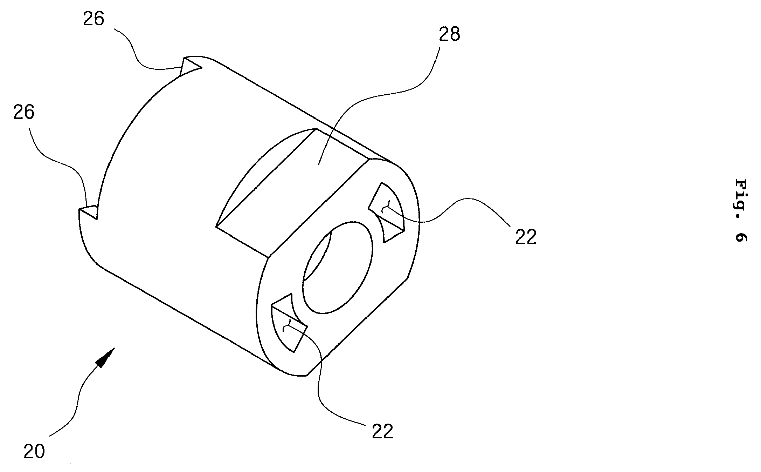

FIG. 6 is a perspective view showing a state that a fastening part is formed on a cap according to the present invention.

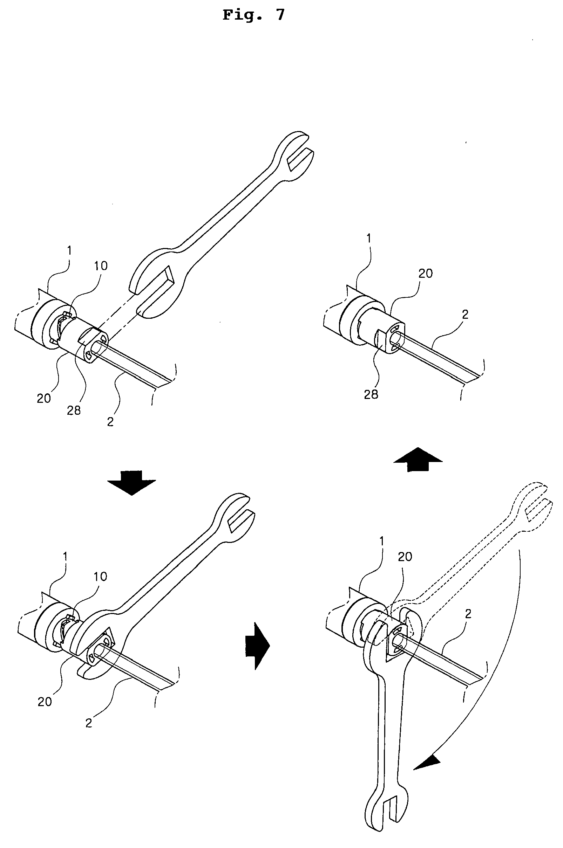

FIG. 7 is a view showing an assembly state of FIG. 6.

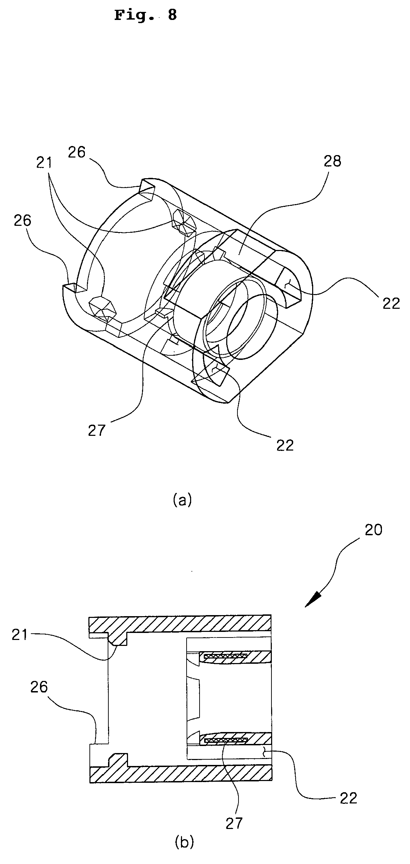

FIG. 8 is an appearance perspective view showing a cap according to another embodiment of the present invention.

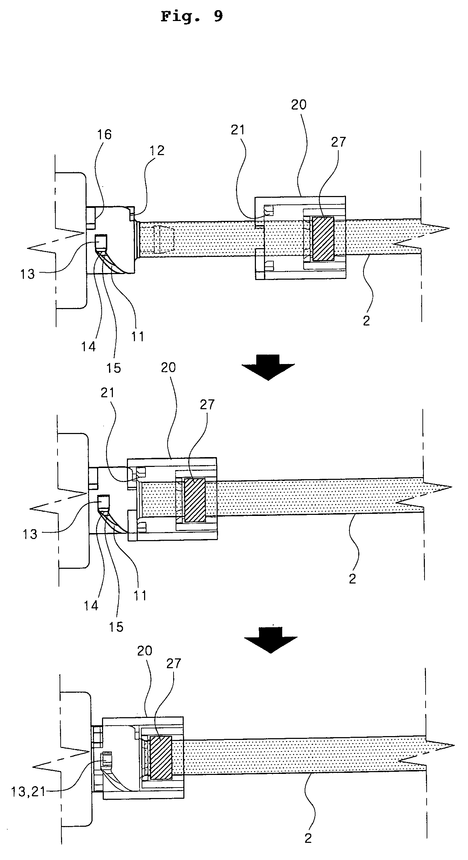

FIG. 9 is a view showing an assembly state of FIG. 8.

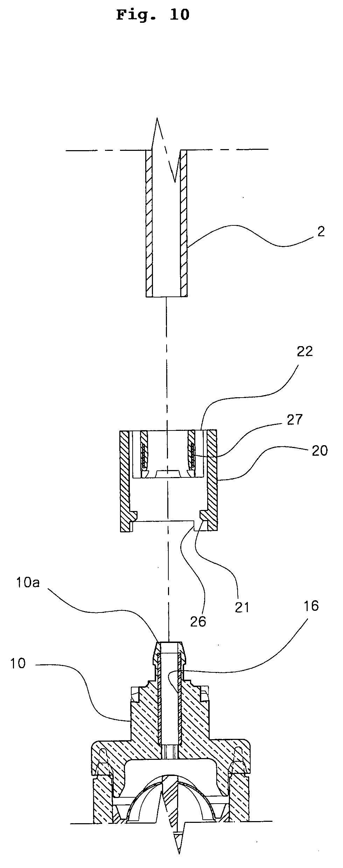

FIG. 10 is an exploded sectional view showing stainless members dually embedded in a tube link part and a cap according to the present invention.

### [Best Mode]

According to a best mode of an embodiment of the present invention, there is provided a tube-fitting structure for a pure-water line, which includes a body 1 mounted on the pure-water line; a tube link part 10 formed on the body 1; a tube 2 fitted into a hollow pipe 10a of the tube link part 10; and a cap 20 for fixing the tube 2, wherein the tube link part 10 is formed with a guide groove 11 which is curved along an outer circumferential surface of the tube link part 10, and a guide protrusion 21 is formed on an inner circumferential surface of the cap 20 corresponding to the guide groove 11, such that the guide protrusion 21 is engaged with the guide groove 11 to move up or down, and wherein an enter guide part 12 and a mount guide groove 13 are formed on upper and lower ends of the guide groove 11, respectively, and a protrusion sill 14 and a latch sill 15 are formed on an inner surface 11a and a top surface 11b of an extension part of the mount guide groove 13, respectively, such that the cap 20 is dually latched to the tube link part 10 in elevation and rotation directions.

### [Mode for Invention]

Hereinafter, the present invention will be described in detail with reference to accompanying drawings as follows.

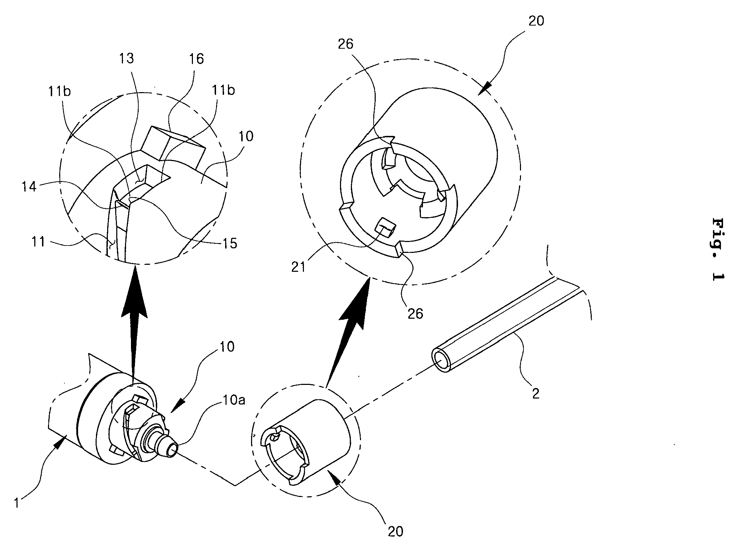

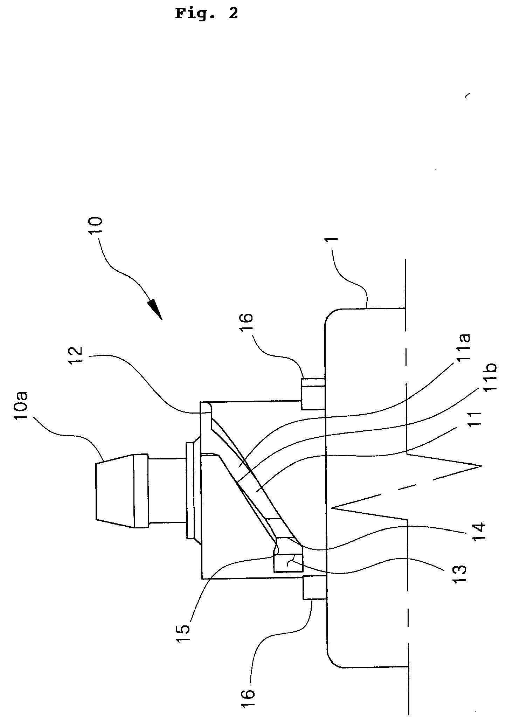

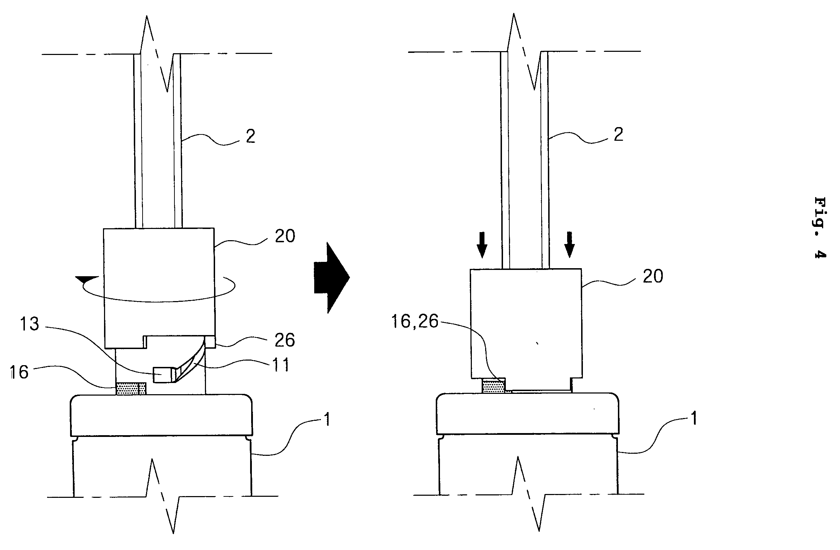

The present invention relates to a tube connecting structure which is installed to a pure-water line of a water purifier or a refrigerator. As shown in FIGS. 1 to 4, a tube link part 10 is formed on a body 1 of a water valve, a filter or a branch pipe on a pure-water line, and a tube 2 is fitted into a hollow pipe 10a of the tube link part 10, such that the tube is fixed by a cap 20. A guide groove 11 is formed on an outer circumferential surface of the tube link part 10 and a guide protrusion 21 is formed on an inner circumferential surface of the cap 20, such that the guide protrusion 21 and the guide groove 11 are assembled to each other while being engaged with each other. The cap 20 moves up or down along the guide groove 11 formed to be curved along the outer circumferential surface of the tube link part 10 while being rotated, such that the cap 20 is simply assembled to the tube link part 10.

In this case, at least two guide grooves 11 may be formed along the circumference of the tube link part 10. However, when taking into consideration a radius of gyration of the cap 20, it is most preferable that two guide grooves 11 are formed at both sides and two guide protrusions 21 are formed corresponding to the guide grooves 11 to control the cap 20.

In addition, when the guide groove 11 is provided with an enter guide part 12 formed on a top end thereof, the guide protrusion 21 is induced to be introduced into the guide groove 11. Thus, if the guide groove 11 and the guide protrusion 21 have only to be substantially placed without need to place the guide groove 11 and the guide protrusion 21 at the exact positions, the guide groove 11 and the guide protrusion 21 are automatically assembled to each other through rotation.

In this case, an inclined angle of the guide groove 11 may be gradually reduced from an introducing portion of the guide protrusion 21 to a lower side of the guide groove 11, so that the air tightness may be maintained in the coupling state of the guide groove 11 and the guide protrusion 21 while the guide protrusion 21 is easily introduced into the guide groove 11. A mount guide groove 13 extends from a lower end of the guide groove 11, such that the guide groove 21 of the cap 20 is latched to the lower end of the guide groove 11 when the guide protrusion 21 is inserted into the guide groove 11. In this case, when the mount guide groove 13 is horizontally formed along an outer circumference surface of the tube link part 10, the guide protrusion 21 is assembled only through horizontal rotation without any vertical movement, so that the cap 20 is prevented from being arbitrarily separated from the tube link part 10 in the state that the cap 20 is assembled to the tube link part 10.

In addition, when a protrusion sill 14 and a latch sill 15 are formed on an inner surface 11a and a top surface 11b of a portion extending from the mount guide groove 13 in the guide groove 11, the cap 20 is dually latched to the tube link part 10, so that the cap may be prevented from being arbitrarily separated from the tube link part 10.

That is, the cap 20 is prevented from being arbitrarily rotated by the protrusion sill 14 and the guide protrusion 21 is latched to the latch sill 15 to be prevented from be rotated while the guide protrusion 21 is tightly closed to the top surface 11b, so that the cap 20 is prevented from being arbitrarily separated.

Specifically, according to the tube-fitting structure, since the cap 20 is in the state that the cap 20 is forcibly assembled by external force, the force of separating the cap 20 is generated in the reverse direction, so that the guide protrusion 21 is tightly closed to the top surface 11b of the guide groove 11. In this case, due to the separating force, the guide protrusion 21 is tightly closed to the top surface 11b of the guide groove 11 by stronger force, so that the guide protrusion 21 cannot go through the latch sill 15 without any external force, thereby preventing arbitrary separation.

Meanwhile, the tube link part 10 is provided with a stopper 16 protruding from a lower end of the outer circumferential surface of the tube link part 10 and the cap 20 is provided with a protrusion sill 26 formed on a lower end of the cap 20 corresponding to the stopper 16, such that a radius of gyration of the cap 20 is restricted. In addition, even when the cap 20 is tightened with strong force by using a separated tool, the cap 20 may be prevented from being rotated more than necessary and the guide protrusion may be coupled to the mount guide groove 13 at a normal position.

In addition, a cylindrical stainless member 27 is embedded inside the cap 20 through an insert molding, so that the cap 20 is reinforced. Thus, even when a high pressure is applied to the cap 20 when the cap 20 is press-fitted into the tube link part 10, the cap 20 may endure the high pressure. In such a coupling structure, since the tube 2 slightly protrudes from a portion, to which the tube 2 is fitted to be latched, that is, the hollow pipe 10a of the tube link part 10, the highest pressure is generated from the portion. The stainless member 27 is embedded in the cap 20 to press an outside of a position at which the hollow pipe 10a is located, the shearing stress of the tube 2 and the cap 20 may be enhanced while the entire cap 20 is prevented from being slightly cracked, so that the sealing strength may be improved. The cap 20 is reinforced by the stainless member 27, so that the cap may be prevented from being damaged or destroyed.

In addition, the body 1 of the water valve, the filter or the branch pipe is molded of synthetic resin, and the stainless member 17, which is relatively stronger than the synthetic resin, is used even for an inside of the body 1, so that the reinforcement may be achieved. In this case, even though the stainless member 17 is formed to be exposed to an inner circumferential surface of the hollow pipe 10a or may be molded in a buried state, it is preferable that the stainless member 17 is insert-molded in the state that the stainless member 17 is buried in the hollow pipe 10a while the stainless member 17 is not exposed to an outside. Thus, since the stainless member 17 is not exposed to an outside, water may be hygienically supplied without exposing any metal materials on a water supply.

Therefore, as shown in FIG. 10, since the tube connecting portion of the body 1 is reinforced by dual stainless members 17 and 27 which are embedded in the tube link part 10 and the cap 20, respectively, the durability of the fitting connection part may be greatly improved, so that the fitting connection part is thoroughly prevented from being bent, and water is prevented from leaking out while the fitting connection part is prevented from being damaged or destroyed.

In addition, when the cap 20 is molded of a transparent material, the stainless member 27 may be confirmed with unaided eyes from an outside. Thus, as shown in FIG. 9, a fitting degree of the tube 2 may be determined based on the stainless member 27 made of an opaque material and serving as a sight.

That is, when a length of the stainless member 27 embedded in the cap 20, in state that the tube 2 is fully fitted into the tube link part 10, an end of the stainless member 27 is formed to correspond to an end of the tube 2, so that it may be determined that the assembly of the cap 20 is incomplete if the end of the tube 2 is exposed to be viewed from an outside when the cap 20 is fitted to be assembled. When the end of the tube 2 is hidden in the stainless member 27 so that the end is not viewed, since it may be determined that the assembly of the cap is completed, the assembly completion state of the cap 20 may be checked by utilizing the stainless member 27 as a sight.

Meanwhile, when the cap 20 is provided with a through-hole 22 formed upwardly corresponding to a portion on which the guide protrusion 21 is formed, a mold may be easily released when an injection molding is performed. In addition, when a tool is fabricated corresponding to the through hole 22, the tool may be utilized as a separator.

That is, as shown in FIGS. 5a to 5c, it is preferable that the cap 20 is simply assembled or disassembled by using a dedicated tool 30. The dedicated tool 30 includes an inserting bundle 31 and an inserting pin 31a formed on the inserting bundle 31 and inserted into the through-hole 22 to be lifted, so that the cap 20 may be simply assembled or disassembled by rotating the dedicated tool 30.

In this case, preferably, the inserting bundle 31 is provided with an opening part 31b formed on one side such that the inserting bundle 31 surrounds the tube 2, and with a knob 32 formed on an outer circumferential surface of the inserting bundle 31 such that the inserting bundle 31 is conveniently rotated by using the knob 32.

In addition, as shown in FIG. 6, the cap 20 is provided with fastening part 28 eccentrically formed on a top end of the outer circumferential surface of the cap 20 in a polygonal shape, such that the cap 20 may be simply assembled by using a separated tool. In addition, even when any dedicated tools do not exist, the cap 20 may be conveniently assembled or disassembled by using various kinds of tools used in home or an office.

## Claims

1. A tube-fitting structure for a pure-water line, the tube-fitting structure comprising:
a body (1) mounted on the pure-water line;
a tube link part (10) formed on the body (1); a tube (2) fitted into a hollow pipe (10a) of the tube link part (10); and
a cap (20) for fixing the tube (2),
wherein the tube link part (10) is formed with a guide groove (11) which is curved along an outer circumferential surface of the tube link part (10), and a guide protrusion (21) is formed on an inner circumferential surface of the cap (20) corresponding to the guide groove (11), such that the guide protrusion (21) is engaged with the guide groove (11) to move up or down, and
wherein an enter guide part (12) and a mount guide groove (13) are formed on upper and lower ends of the guide groove (11), respectively, and a protrusion sill (14) and a latch sill (15) are formed on an inner surface (11a) and a top surface (11b) of an extension part of the mount guide groove(13), respectively, such that the cap (20) is dually latched to the tube link part (10) in elevation and rotation directions.

2. The tube-fitting structure of claim 1, wherein the tube link part (10) is provided with a stopper (16) protruding from a lower end of the outer circumferential surface of the tube link part (10) and the cap (20) is provided with a protrusion sill (26) formed on a lower end of the cap (20) corresponding to the stopper (16), such that a radius of gyration of the cap (20) is restricted.

3. The tube-fitting structure of claim 2, wherein the cap (20) is provided with a cylindrical stainless member (27) embedded inside the cap (20) through an insert molding in order to reinforce the cap (20) and enhance durability against water pressure, such that a fitting part is prevented from being bent.

4. The tube-fitting structure of claim 3, wherein the cylindrical stainless members (17 and 27) are embedded in the tube link part (10) and the cap (20) through the insert molding, such that the tube link part (10) and the cap (20) are dually reinforced by the cylindrical stainless members (17 and 27).

5. The tube-fitting structure of claim 3, wherein the cap (20) is formed of a transparent material such that a fitted state of the tube is confirmed, and the stainless member (27) is formed of an opaque material such that a fitting assembly state of the tube is confirmed with naked eyes according to a length of the stainless member serving as a sight.

6. The tube-fitting structure of claim 1, wherein the cap (20) is provided with a plurality of through-holes (22) formed upwardly corresponding to a portion on which the guide protrusion (21) is formed, such that a mold is easily released when an injection molding is performed and the through holes are utilized as a separator when the mold is released by using a tool.

7. The tube-fitting structure of claim 6, further comprising a dedicated tool (30) including an inserting bundle (31) on which inserting pins 31a inserted into the through-holes (22) are formed, and a knob (32) formed on an outer circumferential surface of the inserting bundle (31) to rotate the inserting bundle (31) by gripping the inserting bundle (31).

8. The tube-fitting structure of claim 6, wherein the cap (20) is provided with a fastening part (28) eccentrically formed on a top end of an outer circumferential surface of the cap (20) in a polygonal shape, such that the cap (20) is assembled or disassembled by using a tool.
